# EUROPEAN PATENT APPLICATION

(11) **EP 2 180 351 A2**
(43) Date of publication of application: **28.04.2010**
(21) Application number: 09171460.0
(22) Date of filing: 28.09.2009
(51) Int. Cl.: G02B 1/04, C08G 77/04, C08K 9/06

(54) **Composition for optical waveguide, preparation method for the composition, optical waveguide produced by using the composition, and optical waveguide manufacturing method**

(30) Priority: 23.10.2008 JP 2008273222
(71) Applicant: Nitto Denko Corporation, Ibaraki-shi, Osaka 567-8680 (JP)
(72) Inventor: Hirayama, Tomoyuki, Osaka 567-8680 (JP); Hirano, Keisuke, Osaka 567-8680 (JP); Hikita, Takami, Osaka 567-8680 (JP)
(74) Representative: Behnisch, Werner

(57) **Abstract**

A composition for an optical waveguide is provided which contains no halogen atom and has no light absorption band in a visible to near-infrared spectral range. A method of preparing the composition is also provided. The composition includes: (A) a fine particulate zirconium oxide material including zirconium oxide fine particles, and a silicone oligomer and a silicone oligomer polymer bonded to outer peripheral surfaces of the zirconium oxide fine particles; and (B) a photoacid generator. For preparation of the composition, the fine particulate zirconium oxide material (A) is prepared by mixing a silicone oligomer in an aqueous dispersion of zirconium oxide fine particles, polymerizing the silicone oligomer in an acidic pH range to provide a silicone oligomer polymer, and bonding the silicone oligomer and the silicone oligomer polymer to outer peripheral surfaces of the zirconium oxide fine particles. Then, the photoacid generator (B) is blended with the fine particulate zirconium oxide material (A).

## Description

### BACKGROUND OF THE INVENTION

### 1. Field of the Invention

The present invention relates to a composition to be used as a material for an optical waveguide component, and to an optical waveguide produced by using the composition. More specifically, the present invention relates to an optical waveguide composition having no light absorption band in a visible to near-infrared spectral range, a preparation method for the composition, an optical waveguide produced by using the composition, and an optical waveguide manufacturing method.

### 2. Description of the Related Art

Optical waveguides are generally incorporated in optical devices such as optical waveguide devices, optical integrated circuits and optical wiring boards, and widely used in optical communications, optical information processing and other general optics. Such an optical waveguide typically includes a core provided as a light passage in a predetermined pattern, and an under-cladding layer and an over-cladding layer covering the core.

Various types of optical waveguide materials are generally used for forming the core, the under-cladding layer and the over-cladding layer in predetermined patterns. An exemplary optical waveguide material currently used is a composition mainly containing a polyimide, an epoxy resin or an acrylate resin imparted with photosensitivity. Such an organic polymer is required to have a heat resistance and a proper linear expansion coefficient, and imparted with various characteristic properties by modifying a main chain and a side chain of a major skeleton thereof as proposed, for example, in JP-A-HEI8(1996)-41323, JP-A-2002-201231 and JP-A-2003-89779.

In order to control the refractive index of the organic polymer, it is necessary to incorporate an aromatic ring or the like in the organic polymer. The resulting polymer has a notable light absorption band attributable to stretching vibrations and bending vibrations of the organic component in a visible to near-infrared spectral range. To cope with this problem, it is proposed to employ an organic polymer having a main skeleton containing a halogen such as fluorine. However, such an organic polymer is costly, and disadvantageously has a greater environmental load. Therefore, there is a demand for a novel material which contains no halogen atom, and is highly transparent in a wider wavelength range. In view of the foregoing, it is an object of the present invention to provide an optical waveguide composition which contains no halogen atom and has no light absorption band in a visible to near-infrared spectral range, a preparation method for the composition, an optical waveguide produced by using the composition, and an optical waveguide manufacturing method.

### SUMMARY OF THE INVENTION

According to a first aspect of the present invention to achieve the aforementioned object, there is provided a composition for an optical waveguide, the composition comprising: (A) a fine particulate zirconium oxide material including zirconium oxide fine particles surface-modified with a silicone oligomer and a silicone oligomer polymer; and (B) a photoacid generator.

According to a second aspect of the present invention, there is provided a method of preparing a composition for an optical waveguide, the method comprising the steps of: preparing a fine particulate zirconium oxide material (A) by mixing a silicone oligomer in an aqueous dispersion of zirconium oxide fine particles, polymerizing the silicone oligomer in an acidic pH range to provide a silicone oligomer polymer, and surface-modifying the zirconium oxide fine particles with the silicone oligomer and the silicone oligomer polymer to bond the silicone oligomer and the silicone oligomer polymer to outer peripheral surfaces of the zirconium oxide fine particles; and blending a photoacid generator (B) with the fine particulate zirconium oxide material (A).

According to a third aspect of the present invention, there is provided an optical waveguide comprising a substrate, a cladding layer provided on the substrate, and a core portion provided in a predetermined pattern in the cladding layer for transmission of an optical signal, at least one of the cladding layer and the core portion being composed of the composition for the optical waveguide according to the first inventive aspect. According to a fourth aspect of the present invention, there is provided a method of manufacturing an optical waveguide, the method comprising the steps of: preparing first and second fine particulate zirconium oxide materials each by mixing a silicone oligomer in an aqueous dispersion of zirconium oxide fine particles, polymerizing the silicone oligomer in an acidic pH range to provide a silicone oligomer polymer, and surface-modifying the zirconium oxide fine particles with the silicone oligomer and the silicone oligomer polymer to bond the silicone oligomer and the silicone oligomer polymer to outer peripheral surfaces of the zirconium oxide fine particles; preparing an optical waveguide composition (α) for use as a core material by blending a photoacid generator with the first fine particulate zirconium oxide material; preparing an optical waveguide composition (β) for use as a cladding layer material by blending the photoacid generator with the second fine particulate zirconium oxide material; applying the composition (β) on a substrate to form an under-cladding precursor layer of the composition (β), and exposing the under-cladding precursor layer to form an under-cladding layer; applying the composition (α) on the under-cladding layer to form a core precursor layer of the composition (α), exposing the core precursor layer into a predetermined pattern, and developing and removing an unexposed portion of the core precursor layer to form a core portion; and applying the composition (β) over the under-cladding layer formed with the core portion of the predetermined pattern to form an over-cladding precursor layer of the composition (β) covering the core portion, and exposing the over-cladding precursor layer to form an over-cladding layer. The inventors of the present invention conducted intensive studies to provide a highly transparent composition for use as a material for an optical waveguide component. The inventors synthesized a variety of compounds having specific structures, and conducted experiments on the synthesized compounds. As a result, the inventors found that, where the fine particulate zirconium oxide material (A) including the zirconium oxide fine particles surface-modified with the silicone oligomer and the silicone oligomer polymer is employed as a constituent of the composition for the optical waveguide, a highly transparent optical waveguide material containing no halogen atom and having no light absorption band in a visible to near-infrared spectral range can be provided. Thus, the inventors attained the present invention.

That is, the fine particulate zirconium oxide material (A) is prepared by mixing the silicone oligomer in the aqueous dispersion of the zirconium oxide fine particles, polymerizing the silicone oligomer in the acidic pH range to provide the silicone oligomer polymer, and surface-modifying the zirconium oxide fine particles with the silicone oligomer and the silicone oligomer polymer to bond the silicone oligomer and the silicone oligomer polymer to the outer peripheral surfaces of the zirconium oxide fine particles. The inventors found that the fine particulate zirconium oxide material prepared by surface-modifying the zirconium oxide fine particles with the silicone oligomer and the silicone oligomer polymer can be stably dispersed in a material for the optical waveguide component. Therefore, the material has a higher refractive index and a higher transparency to provide a satisfactory optical waveguide. Thus, the inventors attained the present invention. As described above, the inventive composition for the optical waveguide includes the fine particulate zirconium oxide material (A) including the zirconium oxide fine particles surface-modified with the silicone oligomer and the silicone oligomer polymer, and the photoacid generator (B). Therefore, the optical waveguide composition contains no halogen atom. Where the optical waveguide composition is used as the optical waveguide material, it is possible to provide a highly transparent optical waveguide having no light absorption band in the visible to near-infrared spectral range. Therefore, the composition is useful, for example, as a material for a highly reliable optical waveguide having a suppressed light loss.

For the preparation of the optical waveguide composition, the fine particulate zirconium oxide material (A) is prepared by mixing the silicone oligomer in the aqueous dispersion of the zirconium oxide fine particles, polymerizing the silicone oligomer in the acidic pH range to provide the silicone oligomer polymer, and surface-modifying the zirconium oxide fine particles with the silicone oligomer and the silicone oligomer polymer to bond the silicone oligomer and the silicone oligomer polymer to the outer peripheral surfaces of the zirconium oxide fine particles. Then, the photoacid generator (B) is blended with the fine particulate zirconium oxide material (A).

In the inventive manufacturing method, the first and second fine particulate zirconium oxide materials are each prepared by surface-modifying the zirconium oxide fine particles with the silicone oligomer and the silicone oligomer polymer by the aforementioned preparation method. Then, the optical waveguide composition (α) for use as the core material is prepared by blending the photoacid generator with the first fine particulate zirconium oxide material, and the optical waveguide composition (β) for use as the cladding layer material is prepared by blending the photoacid generator with the second fine particulate zirconium oxide material. Subsequently, the optical waveguide composition (β) is applied on the substrate to form an under-cladding precursor layer, and expose an under-cladding precursor layer, whereby the under-cladding layer is formed on the substrate. In turn, the optical waveguide composition (α) is applied on the under-cladding layer to form a core precursor layer of the composition (α), exposing the core precursor layer into a predetermined pattern, and the unexposed portion is developed and removed, whereby the core portion is formed on the under-cladding layer. Then, the optical waveguide composition (β) is applied over the under-cladding layer formed with the core portion of the predetermined pattern to form the over-cladding precursor layer, and expose the over-cladding precursor layer, whereby the over-cladding layer is formed on the under-cladding layer as covering the core portion. Thus, the optical waveguide is produced. The optical waveguide thus produced is highly transparent with no light absorption band in the visible to near-infrared spectral range.

### BRIEF DESCRIPTION OF THE DRAWINGS

FIG. 1 is a cross sectional view illustrating an exemplary optical waveguide according to the present invention.
FIGS. 2A to 2F are explanatory diagrams showing an optical waveguide manufacturing process according to the present invention.
FIG. 3 is a chart showing a relationship between an propagation loss and a wavelength for evaluation of the wavelength dependence of the propagation loss.

### DETAILED DESCRIPTION OF EMBODIMENTS

Embodiments of the present invention will hereinafter be described.

### Composition for Optical Waveguide

An inventive composition for an optical waveguide is prepared by employing a specific fine particulate zirconium oxide material (A) including zirconium oxide fine particles surface-modified with a silicone oligomer and a silicone oligomer polymer, and a photoacid generator (B).

More specifically, the specific fine particulate zirconium oxide material (A) includes zirconium oxide fine particles, and a silicone oligomer and a silicone oligomer polymer bonded to outer peripheral surfaces of the zirconium oxide fine particles through a surface modification reaction. The zirconium oxide fine particles are of a metal oxide represented by ZrO₂. The zirconium oxide fine particles preferably have an average particle diameter of, for example, 1 to 100 nm, more preferably 1 to 50 nm, particularly preferably 1 to 20 nm, for excellent transparency. The average particle diameter of the zirconium oxide fine particles is determined by measuring the diameters of the particles in a dispersion of the particles by a dynamic light scattering method or by direct observation of the particles by means of a transmissive electron microscope.

The specific fine particulate zirconium oxide material (A) to be used in the present invention is prepared, for example, in the following manner. An aqueous dispersion of the zirconium oxide fine particles is prepared. After an organic solvent is added to the aqueous dispersion, the pH of the resulting dispersion is adjusted to an acidic pH range. Then, a silicone oligomer is added to the dispersion to be thereby polymerized into a polymer thereof. At the same time, the zirconium oxide fine particles are surface-modified with the silicone oligomer and the silicone oligomer polymer, whereby the silicone oligomer and the silicone oligomer polymer are bonded to surfaces of the zirconium oxide fine particles. Thus, the fine particulate zirconium oxide material (A) is provided, which includes the zirconium oxide fine particles surface-modified with the silicone oligomer and the silicone oligomer polymer. Then, the organic solvent is distilled away, whereby a silicone resin precursor compound (A-stage precursor compound) is prepared which is a transparent and viscous liquid containing the fine particulate zirconium oxide material (A).

The zirconium oxide fine particles are preferably present in a solids concentration of, for example, 10 to 40 wt%, more preferably 20 to 40 wt%, particularly preferably 30 to 40 wt%, in the aqueous dispersion for efficient reaction on the surfaces of the zirconium oxide fine particles.

Specific examples of the aqueous dispersion of the zirconium oxide fine particles include ZSL series available from Daiichi Kigenso Kagaku Kogyo Co., Ltd., NZD series (NZD-3007 and the like) available from Sumitomo Osaka Cement Co., Ltd., and NANOUSE series available from Nissan Chemical Industries, Ltd.

Examples of the silicone oligomer include polymethylalkoxysilane derivatives each having a reactive alkoxysilyl group at a terminal of a molecule thereof, polymethylsilsesquioxane derivatives each having a reactive alkoxysilyl group at a terminal of a molecule thereof, and disilanol derivatives each having reactive silanol groups at opposite terminals of a molecule thereof. These derivatives may be used either alone or in combination. A specific example of the silicone oligomer is a silicone oligomer represented by the following structural formula (I): 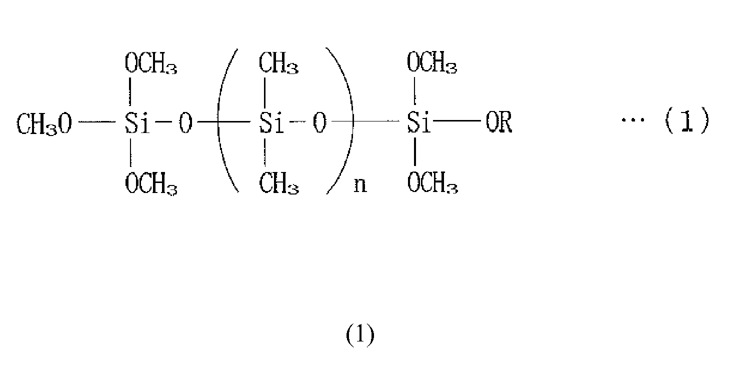 wherein R is -CH₃ or -C₂H₅, and n is a positive number.

In the aforementioned formula (1), the repetition number n is preferably 0 to 20, particularly preferably 1 to 7. In the formula (1), R is particularly preferably -CH₃. Specific examples of the polymethylsilsesquioxane derivatives each having a reactive alkoxysilyl group at the terminal of the molecule thereof include KC89, KR500, X-40-9246 and X-40-9225 available from Shin-Etsu Chemical Co., Ltd.

The amount of the silicone oligomer to be used is properly determined according to the concentration of the zirconium oxide fine particles.

The silicone oligomer is added dropwise at a proper rate to the aqueous dispersion of the zirconium oxide fine particles having a pH adjusted in the acidic pH range after the addition of the organic solvent.

Examples of the organic solvent include methanol and isopropyl alcohol (IPA) which are generally used for a synthetic reaction, and 2-methoxymethanol which is generally used for dehydration. These organic solvents may be used either alone or in combination. The amount of the organic solvent to be added is preferably such that the weight ratio of the silicone oligomer to the organic solvent is about 1:1 where the organic solvent is of the type to be used for the synthetic reaction.

The acidic pH range is preferably from pH 2 to pH 4, particularly preferably pH 2 to pH 3.5. For adjustment of the pH of the dispersion, concentrated hydrochloric acid, concentrated sulfuric acid, concentrated nitric acid or the like, for example, is properly added to the dispersion.

Conditions for the polymerization and the surface modification are such that a temperature is 20°C to 80°C, preferably 40°C to 60°C, and a period is 1 to 6 hours, preferably 1 to 4 hours.

The silicone oligomer polymer resulting from the polymerization of the silicone oligomer preferably has a viscosity of 0.1 to 10 Pa.s, more preferably 0.4 to 4 Pa.s, at 25°C. The silicone oligomer polymer having a viscosity in this range ensures easy handling of the silicone oligomer polymer for coating, and formation of an even and thick coating film. The viscosity is measured by means of a Brookfield's viscometer (e.g., HDBV-I+CP).

The photoacid generator (B) is used for imparting the optical waveguide composition with UV curability. Examples of the photoacid generator include aromatic diazonium salts, aromatic sulfonium salts, aromatic iodonium salts, aromatic sulfoxonium salts, methalocene compounds, iron arene compounds, among which the aromatic sulfonium salts are preferred for photo-curability and bondability. Besides the photoacid generator (B), additives such as a photo-sensitizer and an acid proliferator may be added to the composition as required. The photoacid generator (B) is preferably added in a proportion of 0.1 to 10 parts by weight, more preferably 0.5 to 5 parts by weight, based on 100 parts by weight of the specific fine particulate zirconium oxide material (A).

Besides the fine particulate zirconium oxide material (A) and the photoacid generator (B), a silane- or titanium-based coupling agent for improvement of adhesiveness, a flexibility imparting compound such as an olefin oligomer, a cycloolefin oligomer or polymer (e.g., a norbornene polymer), a synthetic rubber or a silicone compound, an antioxidant, or a defoaming agent may be used as required. These additives may be each blended in the inventive optical waveguide composition in a proper amount such as not to impair the effects of the invention.

The inventive optical waveguide composition including the aforementioned components may be mixed with a solvent to be dispersed and dissolved in the solvent for preparation of a varnish for coating, as long as the solvent does not impair the excellent effects of the invention. Examples of the solvent include methanol, 2-methoxyethanol, 2-propanol, methyl ethyl ketone, cyclohexanone, 2-butanone, N,N-dimethylacetamide, diglyme, diethylene glycol methyl ethyl ether, propylene glycol methyl acetate, propylene glycol monomethyl ether, tetramethylfurane, dimethoxyethane and ethyl lactate. These solvents may be used either alone or in combination in a proper amount so as to provide a proper viscosity.

The inventive optical waveguide composition is prepared, for example, in the following manner. The fine particulate zirconium oxide material (A) is prepared in the aforementioned manner by bonding the silicone oligomer and the silicone oligomer polymer to the outer peripheral surfaces of the zirconium oxide fine particles in the presence of the organic solvent through the surface modification. Then, the organic solvent is distilled away, whereby the silicone resin precursor compound (A-stage precursor compound) which is a transparent and viscous liquid containing the fine particulate zirconium oxide material (A). In turn, the photoacid generator (B) is blended with the silicone resin precursor compound. Thus, the optical waveguide composition is prepared.

The proportions of the respective constituents of the inventive optical waveguide composition are determined depending upon components (a core portion, an under-cladding layer and an over-cladding layer) of the optical waveguide for which the inventive optical waveguide composition is used. Where the optical waveguide composition is used as a material for the core portion (corresponding to an optical waveguide composition (α) to be described later), the zirconium oxide fine particles are preferably present in the optical waveguide composition in a proportion greater than 0 wt% and not greater than 40 wt% based on the overall weight of the composition. On the other hand, where the optical waveguide composition is used as a material for the cladding layers (corresponding to an optical waveguide composition (β) to be described later), the zirconium oxide fine particles are preferably present in the optical waveguide composition in a proportion that is smaller than the proportion of the zirconium oxide fine particles in the optical waveguide composition for the core portion. That is, the proportion of the zirconium oxide fine particles is smaller in the cladding layer material than in the core portion material, whereby a difference in refractive index between the core portion and the cladding layers can be easily set within a proper range (more specifically, not less than 0.5 for a multi-mode optical waveguide, and not less than 0.05 and less than 0.5 for a single mode optical waveguide).

The material for the core portion (e.g., a varnish for the core portion) preferably has a viscosity of 500 to 5000 mPa·s (at 25°C), more preferably 1000 to 3000 mPa·s (at 25°C). On the other hand, the material for the cladding layers (e.g., a varnish for the cladding layers) preferably has a viscosity of 200 to 5000 mPa·s (at 25°C), more preferably 300 to 1000 mPa·s (at 25°C). The viscosities of the core portion and the cladding layers are measured by means of a Brookfield's viscometer (DV-I+).

### Optical Waveguide

An optical waveguide produced by employing the inventive optical waveguide composition will hereinafter be described.

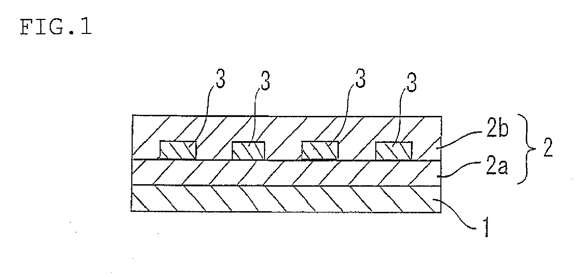

As shown in FIG. 1, an inventive optical waveguide includes a substrate 1, a cladding layer 2 (an under-cladding layer 2a and an over-cladding layer 2b) provided on the substrate 1, and a core portion 3 provided in a predetermined pattern in the cladding layer 2 for transmission of an optical signal. At least one of the cladding layer 2 and the core portion 3 is composed of the optical waveguide composition containing the aforementioned specific fine particulate zirconium oxide material (A) and the photoacid generator (B). Particularly, two types of optical waveguide compositions containing the zirconium oxide fine particles in different proportions are preferably used as materials for the core portion 3 and the cladding layer 2 to provide an optical waveguide including a highly transparent structure and having no light absorption band in a visible to near-infrared spectral range. In the inventive optical waveguide, the cladding layer 2 should have a lower refractive index than the core portion 3.

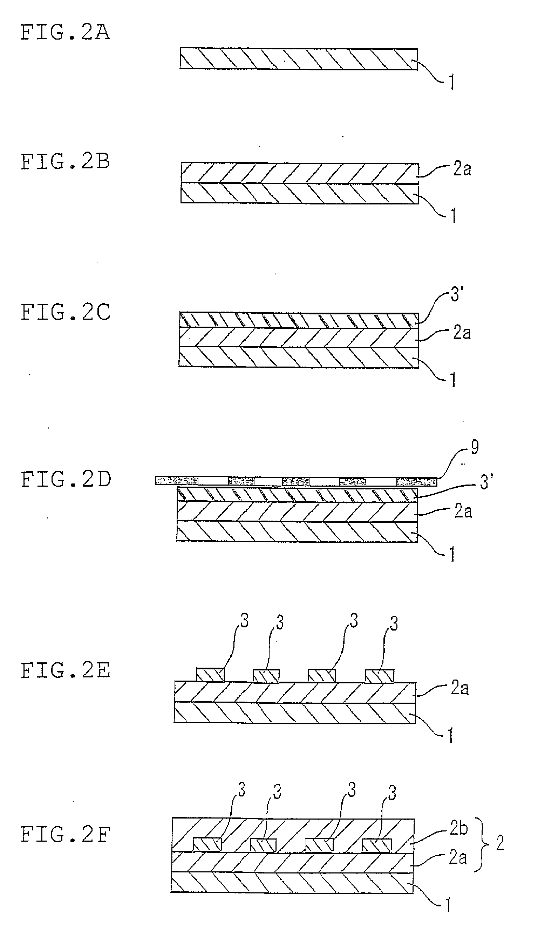

In the present invention, the optical waveguide is produced, for example, through process steps shown in FIGS. 2A to 2F. As shown in FIG. 2A, the substrate 1 is first prepared. As shown in FIG. 2B, the optical waveguide composition (β) containing the zirconium oxide fine particles is applied onto a surface of the substrate 1, and then exposed to active energy radiation such as ultraviolet radiation and heat-treated. Thus, an under-cladding layer 2a (a lower portion of the cladding layer 2) is formed. In turn, as shown in FIG. 2C, the optical waveguide composition (α) containing the zirconium oxide fine particles in a proportion greater than 0 wt% and not greater than 40 wt% for formation of the core portion 3 is applied onto the under-cladding layer 2a to form a layer 3' of the composition (α). Then, as shown in FIG. 2D, a photo mask 9 having a predetermined pattern (optical waveguide pattern) is placed on the layer 3' of the composition (α), which is in turn irradiated with (exposed to) active energy radiation such as ultraviolet radiation via the photomask 9 and heat-treated. Then, an unexposed portion of the layer 3' of the composition (α) is dissolved away with the use of a developing solution. Thus, the core portion 3 is formed as shown in FIG. 2E. Subsequently, as shown in FIG.2F, the optical waveguide composition (β) containing the zirconium oxide fine particles is applied over the under-cladding layer 2a as covering the core portion 3, and then irradiated with (exposed to) active energy radiation such as ultraviolet radiation and heat-treated. Thus, an over-cladding layer 2b (an upper portion of the cladding layer 2) is formed. In this manner, the intended optical waveguide is provided. As previously described, the proportion of the zirconium oxide fine particles in the optical waveguide composition (β) is determined according to the refractive index of the cladding layer, but is typically smaller than the proportion of the zirconium oxide fine particles in the optical waveguide composition (α).

Examples of the active energy radiation other than the ultraviolet radiation include light radiation such as far ultraviolet radiation and near ultraviolet radiation, electromagnetic radiation such as X-rays and γ-rays, electron radiation, proton radiation and neutron radiation. Exemplary ultraviolet radiation sources for irradiation with the ultraviolet radiation include a low-pressure mercury-vapor lamp, a high-pressure mercury-vapor lamp and an ultra-high-pressure mercury-vapor lamp. The dose of the ultraviolet radiation is typically 10 to 10000 mJ/cm², preferably 50 to 5000 mJ/cm², more preferably 500 to 3000 mJ/cm².

In order to complete a photo crosslinking reaction for completely curing the composition after the exposure to the active energy radiation such as the ultraviolet radiation, the heat treatment is preferably performed as described above. Conditions for the heat treatment are properly determined according to the formulation of the optical waveguide composition, but may be such that a heat treatment temperature is 80°C to 250°C, preferably 100°C to 150°C, and a heat treatment period is 10 seconds to 2 hours, preferably 5 minutes to 1 hour.

Examples of the substrate 1 include polymer films and glass substrates. Specific examples of the polymer films include polyethylene terephthalate (PET) films, polyethylene naphthalate films and polyimide films. The substrate 1 typically has a thickness of 10 µm to 3 mm.

Exemplary methods for applying the material for formation of each of the layers on the substrate 1 include coating methods employing a spin coater, a coater, a disk coater or a bar coater, a screen printing method, a capillary injection method employing a spacer to form a gap in which the material is injected through the capillary phenomenon, and a roll-to-roll continuous coating method employing a coater such as a multi-coater. The optical waveguide may be separated from the substrate 1 to be provided in the form of a film optical waveguide. In this case, the optical waveguide is more excellent in flexibility.

The resulting optical waveguide may be used as a linear optical waveguide, a curved optical waveguide, a cross optical waveguide, a Y-branched optical waveguide, a slab optical waveguide, a Mach-Zehnder optical waveguide, an AWG optical waveguide, a grating or an optical waveguide lens. Exemplary optical devices employing any of these optical waveguides include a wavelength filter, an optical switch, an optical demultiplexer, an optical multiplexer, an optical multiplexer/demultiplexer, an optical amplifier, a wavelength modulator, an wavelength divider, an optical splitter, a directional coupler, and an optical transmission hybrid module including a laser diode and a photo diode in combination.

### EXAMPLES

The present invention will hereinafter be described by way of examples. However, it should be understood that the invention be not limited to these examples.

### Example 1

Prior to production of an optical waveguide of Example 1, a varnish base for a core portion and a varnish base for a cladding layer were prepared in the following manner.

### Preparation of Varnish Base for Core portion

First, 9.3 g of an aqueous dispersion of zirconium oxide (zirconium dioxide) fine particles having an average particle diameter of 4 nm (NZD-3007 available from Sumitomo Osaka Cement Co., Ltd., and having a solids concentration of 40 wt%), 9.3 g of methanol and 9.3 g of 2-methoxyethanol were added to a reaction vessel provided with a reflux condenser and a dropping funnel. Then, concentrated hydrochloric acid was added to the resulting dispersion to adjust the pH of the dispersion at pH 2.5 to pH 3.3. Subsequently, a solution prepared by dissolving 37.5 g of a polymethylsilsesquioxane compound having a reactive alkoxysilyl group at its molecular terminal (X-40-9225 available from Shin-Etsu Chemical Co., Ltd.) in 37.5 g of 2-propanol was added to the resulting dispersion by means of the dropping funnel. More specifically, half the amount of the polymethylsilsesquioxane compound solution was added dropwise to the dispersion kept at 60°C in one hour, and then the resulting dispersion was cooled to a room temperature (25°C). In turn, the rest of the polymethylsilsesquioxane compound solution was added to the resulting dispersion at a time to allow a polymerization/surface modification reaction to occur. After the completion of the reaction, the solvent was distilled away. Thus, the varnish base for the core portion was prepared, which was a transparent and viscous liquid (A-stage liquid) containing a fine particulate zirconium oxide material and having a viscosity of 2.0 Pa·s at 25°C and a zirconium oxide fine particle concentration of 10 wt%).

### Preparation of Varnish Base for Cladding layer

First, 5.9 g of an aqueous dispersion of zirconium oxide (zirconium dioxide) fine particles having an average particle diameter of 4 nm (NZD-3007 available from Sumitomo Osaka Cement Co., Ltd., and having a solids concentration of 40 wt%), 5.9 g of methanol and 5.9 g of 2-methoxyethanol were added to a reaction vessel provided with a reflux condenser and a dropping funnel. Then, concentrated hydrochloric acid was added to the resulting dispersion to adjust the pH of the dispersion at pH 2.5 to pH 3.3. Subsequently, a solution prepared by dissolving 112.5 g of a polymethylsilsesquioxane compound having a reactive alkoxysilyl group at its molecular terminal (X-40-9225 available from Shin-Etsu Chemical Co., Ltd.) in 112.5 g of 2-propanol was added to the resulting dispersion by means of the dropping funnel. More specifically, the entire amount of the polymethylsilsesquioxane compound solution was added dropwise to the dispersion kept at 60°C in 1.5 hours, and then the resulting dispersion was cooled to a room temperature (25°C) to allow a polymerization/surface modification reaction to occur. After the completion of the reaction, the solvent was distilled away. Thus, the varnish base for the cladding layer was prepared, which was a transparent and viscous liquid (A-stage liquid) containing a fine particulate zirconium oxide material and having a viscosity of 0.5 Pa·s at 25°C and a zirconium oxide fine particle concentration of 2 wt%.

### Evaluation of Refractive Indexes

The varnish bases thus prepared for the core portion and the cladding layer were each applied to a thickness of 10 µm on a silicon wafer by a spin coater, and then heat-treated at 150°C for one hour. Then, the refractive indexes of the resulting films were measured by a prism coupler (SPA4000 available from Sairon Technology, Inc.). As a result, the refractive index n of the film of the varnish base for the cladding layer was 1.42 at a wavelength of 830 nm, and the refractive index n of the film of the varnish base for the core portion was 1.43 at a wavelength of 830 nm. A difference in refractive index was about 1 %.

### Production of Optical Waveguide

An under-cladding layer, a core portion and an over-cladding layer were formed in the following manner to produce an optical waveguide (see FIG. 1). Then, the optical waveguide was evaluated in the following manner.

### Formation of Under-Cladding Layer

A varnish (varnish-A) to be used for the formation of the cladding layers was prepared by adding 1 wt% of a photoacid generator (K-1 available from San-Apro Ltd.) to the varnish base for the cladding layers.

Then, a glass substrate (180 mm x 180 mm x 1.2 mm (thickness)) was prepared, and the varnish-A was applied onto a surface of the glass substrate by means of a spin coater. In turn, the entire surface of the resulting layer of the varnish-A was irradiated with (exposed to) mixed radiation (active energy radiation from a filterless light source) at a dose of 1000 mJ/cm² with the use of a mask aligner. Then, the layer of the varnish-A was heat-treated on a hot plate at 80°C for one hour to be thereby completely cured. Thus, the under-cladding layer was formed (see FIG. 2B). The under-cladding layer had a thickness of 5 µm as measured by a contact thickness meter. Further, the under-cladding layer had a refractive index of 1.433 at a wavelength of 830 nm.

### Formation of Core Portion

A varnish (varnish-B) to be used for formation of the core portion was prepared by adding 1 wt% of a photoacid generator (K-1 available from San-Apro Ltd.) to the varnish base for the core portion.

In turn, the varnish-B was applied onto the under-cladding layer by means of a spin coater, and then the resulting layer was preliminarily baked at 80°C for 10 minutes. Thus, a core precursor layer was formed (see FIG.2C). Further, a synthetic quartz-based chromium mask (photo mask) having a 80-µm wide elongated optical waveguide pattern was placed on the core precursor layer (see FIG.2D), and the core precursor layer was irradiated with (exposed to) I-line radiation (at a wavelength of about 365nm) at a dose of 8000 mJ/cm² via the chromium mask by a contact exposure method. After the exposure, the resulting core precursor layer was heat-treated at 80°C for ten minutes. Thereafter, the resulting substrate was immersed in 2-propanol (developing liquid) for 3 minutes, whereby non-irradiated portion (unexposed portion) was fully removed through development. Then, the remaining core portion was heat-treated on a hot plate at 150°C for one hour to form a core pattern (FIG.2E). The core pattern had a sectional shape having a width of 80 µm and a height of 6 µm as measured by a SEM. The core portion thus formed had a refractive index of 1.417 at a wavelength of 830 nm.

### Formation of Over-Cladding Layer

After the formation of the core pattern, a varnish having the same formulation as the varnish-A prepared for the formation of the under-cladding layer was applied over the under-cladding layer as covering the core portion by means of a spin coater. In turn, the resulting varnish layer was irradiated with (exposed to) I-line radiation (at a wavelength of about 365 nm) at a dose of 1000 mJ/cm² as in the formation of the under-cladding layer, and then heat-treated on a hot plate at 80°C for two hours to be thereby completely cured. Thus, the over-cladding layer was formed (see FIG.2F). In this manner, a multi-mode optical waveguide having a specific refractive index Δ of 1% was produced.

### Example 2

A varnish base for a core portion was prepared in substantially the same manner as in the preparation of the core portion varnish base of Example 1, except that 56.3 g of the aqueous dispersion of the zirconium oxide (zirconium dioxide) fine particles having an average particle diameter of 4 nm (NZD-3007 available from Sumitomo Osaka Cement Co., Ltd. and having a solids concentration of 40 wt%) was used. The varnish base thus prepared for the core portion was a transparent and viscous liquid (A-stage liquid) containing a fine particulate zirconium oxide material and having a viscosity of 3.2 Pa·s at 25°C and a zirconium oxide fine particle concentration of 37.5 wt%.

In turn, a varnish to be used for formation of the core portion was prepared by adding 1 wt% of a photoacid generator (K-1 available from San-Apro Ltd.) to the varnish base for the core portion.

On the other hand, a varnish base for cladding layers was prepared in substantially the same manner as in the preparation of the cladding layer varnish base of Example 1, except that 24.7 g of the aqueous dispersion of the zirconium oxide (zirconium dioxide) fine particles having an average particle diameter of 4 nm (NZD-3007 available from Sumitomo Osaka Cement Co., Ltd. and having a solids concentration of 40 wt%) was used. The varnish base thus prepared for the cladding layers was a transparent and viscous liquid (A-stage liquid) containing a fine particulate zirconium oxide material and having a viscosity of 2.8 Pa·s at 25°C and a zirconium oxide fine particle concentration of 20.8 wt%.

In turn, a varnish to be used for formation of the cladding layers was prepared by adding 1 wt% of a photoacid generator (K-1 available from San-Apro Ltd.) to the varnish base for the cladding layers.

An optical waveguide was produced in substantially the same manner as in Example 1, except that the varnishes thus prepared were used. The cladding layers and the core portion of the optical waveguide thus produced had refractive indexes of 1.46 and 1.51, respectively, at a wavelength of 830 nm. The optical waveguide thus produced had a specific refractive index Δ of 3%.

### Example 3

A varnish base for a core portion was prepared in substantially the same manner as in the preparation of the core portion varnish base of Example 1, except that 16.1 g of the aqueous dispersion of the zirconium oxide (zirconium dioxide) fine particles having an average particle diameter of 4 nm (NZD-3007 available from Sumitomo Osaka Cement Co., Ltd. and having a solids concentration of 40 wt%) was used. The varnish base thus prepared for the core portion was a transparent and viscous liquid (A-stage liquid) containing a fine particulate zirconium oxide material and having a viscosity of 2.3 Pa·s at 25°C and a zirconium oxide fine particle concentration of 14.7 wt%.

In turn, a varnish to be used for formation of the core portion was prepared by adding 1 wt% of a photoacid generator (K-1 available from San-Apro Ltd.) to the varnish base for the core portion.

On the other hand, a varnish base for cladding layers was prepared in substantially the same manner as in the preparation of the cladding layer varnish base of Example 1, except that 4.1 g of the aqueous dispersion of the zirconium oxide (zirconium dioxide) fine particles having an average particle diameter of 4 nm (NZD-3007 available from Sumitomo Osaka Cement Co., Ltd. and having a solids concentration of 40 wt%) was used. The varnish base thus prepared for the cladding layers was a transparent and viscous liquid (A-stage liquid) containing a fine particulate zirconium oxide material and having a viscosity of 0.8 Pa·s at 25°C and a zirconium oxide fine particle concentration of 4.2 wt%.

In turn, a varnish to be used for formation of the cladding layers was prepared by adding 1 wt% of a photoacid generator (K-1 available from San-Apro Ltd.) to the varnish base for the cladding layer.

An optical waveguide was produced in substantially the same manner as in Example 1, except that the varnishes thus prepared were used. The core portion and the cladding layers of the optical waveguide thus produced had refractive indexes of 1.445 and 1.423, respectively, at a wavelength of 830 nm. The optical waveguide thus produced had a specific refractive index Δ of 1.5%.

### Comparative Example

### Cladding Layer Material

A material for under- and over-cladding layers was prepared by mixing 35 parts by weight of bisphenoxyethanolfluorene diglycidyl ether, 40 parts by weight of 3',4'-epoxycyclohexyl methyl 3,4-epoxycyclohexanecarboxylate (an alicyclic epoxy resin CELLOXIDE 2021P manufactured by Daicel Chemical Industries, Ltd.), 25 parts by weight of (3',4'-epoxycyclohexane)methyl 3',4'-epoxycyclohexyl carboxylate (CELLOXIDE 2081 manufactured by Daicel Chemical Industries, Ltd.), and 1 part by weight of a 50% propione carbonate solution of 4,4'-bis[di(β-hydroxyethoxy)phenylsulfinio]phenylsulfide bishexafluoroantimonate (photoacid generator). The cladding layer material had a viscosity of 1000 mPa·s.

### Core Portion Material

A material for a core portion was prepared by dissolving 70 parts by weight of bisphenoxyethanolfluorene diglycidyl ether, 30 parts by weight of 1,3,3-tris{4-[2-(3-oxetanyl)]butoxyphenyl}butane and 0.5 part by weight of a 50% propione carbonate solution of 4,4'-bis[di(β- hydroxyethoxy)phenylsulfinio]phenylsulfide bishexafluoroantimonate (photoacid generator) in 28 parts by weight of ethyl lactate. An optical waveguide was produced in substantially the same manner as in Example 1 by using the cladding layer material and the core portion material. The core portion and the cladding layers of the optical waveguide thus produced had refractive indexes of 1.59 and 1.54, respectively, at a wavelength of 830 nm. The optical waveguide thus produced had a specific refractive index Δ of 3.2%.

For each of the optical waveguides thus produced, the wavelength dependence of an propagation loss was determined and evaluated in the following manner.

### Wavelength Dependence of Propagation Loss

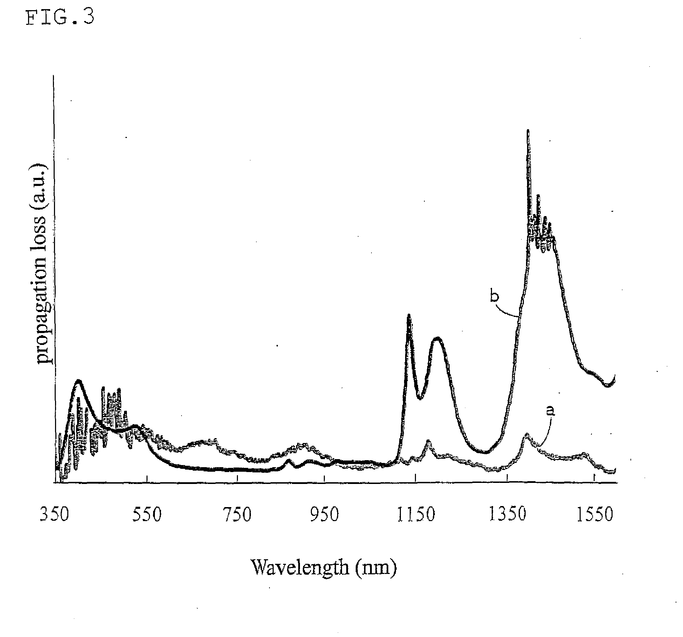

The propagation losses of the optical waveguides of Example 1 and Comparative Example were measured by means of a spectral analyzer (Ando's AQ6315A) for evaluation of the wavelength dependence of the propagation loss. The results of the measurement are shown in FIG. 3. In FIG. 3, a line (a) represents Example 1, and a line (b) represents Comparative Example. The results indicate that the optical waveguide of Comparative Example had light absorption bands in two wavelength ranges, i.e., in a wavelength range of 1150 to 1200 nm and in a wavelength range of 1400 to 1500 nm. On the contrary, the optical waveguide of Example 1 apparently had no notable light absorption band as compared with the optical waveguide of Comparative Example. Further, the propagation losses of the optical waveguides of Examples 2 and 3 were also measured in the same manner as for Example 1, and substantially the same results as for Example 1 were provided. The optical waveguides of Examples 2 and 3 had no notable light absorption band as compared with the optical waveguide of Comparative Example.

### INDUSTRIAL APPLICABILITY

The inventive optical waveguide composition is useful as a material for components of various types of optical waveguides. Examples of the optical waveguides include a linear optical waveguide, a curved optical waveguide, a cross optical waveguide, a Y-branched optical waveguide, a slab optical waveguide, a Mach-Zehnder optical waveguide, an AWG optical waveguide, a grating and an optical waveguide lens. Exemplary optical devices employing any of these optical waveguides include a wavelength filter, an optical switch, an optical demultiplexer, an optical multiplexer, an optical multiplexer/demultiplexer, an optical amplifier, a wavelength modulator, an wavelength divider, an optical splitter, a directional coupler, and an optical transmission hybrid module including a laser diode and a photo diode in combination.

Although specific forms of embodiments of the instant invention have been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention which is to be determined by the following claims.

## Claims

1. A composition for an optical waveguide, the composition comprising:
(A) a fine particulate zirconium oxide material including zirconium oxide fine particles surface-modified with a silicone oligomer and a silicone oligomer polymer; and
(B) a photoacid generator.

2. A composition as set forth in claim 1,
wherein, if the composition is to be used for formation of a core portion of the optical waveguide, the zirconium oxide fine particles of the fine particulate zirconium oxide material (A) are present in a proportion greater than 0 wt% and not greater than 40 wt% based on an overall weight of the composition,
wherein, if the composition is to be used for formation of a cladding layer of the optical waveguide, the zirconium oxide fine particles of the fine particulate zirconium oxide material (A) are present in a proportion that is smaller than the proportion of the zirconium oxide fine particles of the fine particulate zirconium oxide material (A) in the composition to be used for the formation of the core portion.

3. A method of preparing a composition for an optical waveguide, the method comprising the steps of:
preparing a fine particulate zirconium oxide material (A) by mixing a silicone oligomer in an aqueous dispersion of zirconium oxide fine particles, polymerizing the silicone oligomer in an acidic pH range to provide a silicone oligomer polymer, and surface-modifying the zirconium oxide fine particles with the silicone oligomer and the silicone oligomer polymer to bond the silicone oligomer and the silicone oligomer polymer to outer peripheral surfaces of the zirconium oxide fine particles; and blending a photoacid generator (B) with the fine particulate zirconium oxide material (A).

4. The method as set forth in claim 3, wherein the acidic pH range is pH 2 to pH 4.

5. An optical waveguide comprising:
a substrate;
a cladding layer provided on the substrate; and
a core portion provided in a predetermined pattern in the cladding layer for transmission of an optical signal;
wherein at least one of the cladding layer and the core portion being composed of a composition as recited in claim 1 or 2.

6. A method of manufacturing an optical waveguide, the method comprising the steps of:
preparing first and second fine particulate zirconium oxide materials each by mixing a silicone oligomer in an aqueous dispersion of zirconium oxide fine particles,
polymerizing the silicone oligomer in an acidic pH range to provide a silicone oligomer polymer, and surface-modifying the zirconium oxide fine particles with the silicone oligomer and the silicone oligomer polymer to bond the silicone oligomer and the silicone oligomer polymer to outer peripheral surfaces of the zirconium oxide fine particles;
preparing an optical waveguide composition (α) for use as a core material by blending a photoacid generator with the first fine particulate zirconium oxide material;
preparing an optical waveguide composition (β) for use as a cladding layer material by blending the photoacid generator with the second fine particulate zirconium oxide material;
applying the composition (β) on a substrate to form an under-cladding precursor layer of the composition (β), and exposing the under-cladding precursor layer to form an under-cladding layer;
applying the composition (α) on the under-cladding layer to form a core precursor layer of the composition (α), exposing the core precursor layer into a predetermined pattern, and developing and removing an unexposed portion of the core precursor layer to form a core portion; and
applying the composition (β) over the under-cladding layer formed with the core portion of the predetermined pattern to form an over-cladding precursor layer of the composition (β) covering the core portion, and exposing the over-cladding precursor layer to form an over-cladding layer.

7. A method as set forth in claim 6,
wherein the zirconium oxide fine particles are present in the composition (α) in a proportion greater than 0 wt% and not greater than 40 wt% based on an overall weight of the composition (α),
wherein the zirconium oxide fine particles are present in the composition (β) in a proportion smaller than the proportion of the zirconium oxide fine particles present in the composition (α).

8. A method as set forth in claim 6 or 7,
wherein the under-cladding precursor layer of the composition (β) is heated after the exposure to form the under-cladding layer.

9. A method as set forth in any one of claims 6 to 8,
wherein the core precursor layer of the composition (α) is heated after the development to form the core portion.

10. A method as set forth in any one of claims 6 to 9,
wherein the over-cladding precursor layer of the composition (β) is heated after the exposure to form the over-cladding layer.
